# EUROPEAN PATENT APPLICATION

(11) **EP 1 758 336 A1**
(43) Date of publication of application: **28.02.2007**
(21) Application number: 05291777.0
(22) Date of filing: 24.08.2005
(51) Int. Cl.: H04L 29/06, H04L 12/56, H04L 12/28

(54) **ARP relay**

(71) Applicant: ALCATEL, 75008 Paris (FR)
(72) Inventor: Cetin, Riza, 2018 Antwerpen (BE); Peschi, Robert Nicolas Louis, 1200 Woluwe-Saint-Lamber (BE)
(74) Representative: Narmon, Gisèle Marie Thérèse

(57) **Abstract**

The present invention relates to an access unit comprising:
- at least one user port (101 to 107) for coupling to a user device (11,12),
- at least one network port (111) for coupling to an edge router (32),
- a local repository (124) wherein user network addresses (IP@) are held in one-to-one relationship with user port identifiers (portID),
- a forwarding unit (121) coupled to the at least one user port and the at least one network port, and adapted to receive through a particular user port (101 to 107) a request (ARP1) to resolve a particular network address (IP@2) into a hardware address, and to forward the request through a particular network port (111) towards the edge router.
An access unit according to the invention further comprises a forwarding control unit (122) coupled to the local repository and to the forwarding unit, and adapted to get from the local repository a particular port identifier (portID1) associated with the particular network address, and to discard the request if the particular port identifier identifies the particular port.

## Description

The present invention relates to an access unit comprising:
- at least one user port for coupling to a user device,
- at least one network port for coupling to an edge router,
- a local repository wherein user network addresses are held in one-to-one relationship with user port identifiers,
- a forwarding unit coupled to said at least one user port and said at least one network port, and adapted to receive through a particular user port a request to resolve a particular network address into a hardware address, and to forward said request through a particular network port towards said edge router.

Such an access unit is for instance a Digital Subscriber Line Access Multiplexer (DSLAM) or an Ethernet bridge providing users with an access towards e.g. the Internet.

Typically, user devices are connected via the access unit, and further via a L2 communication network such as an Ethernet-based Metropolitan Area Network (EMAN), to an edge router.

Users can be grouped within the same subnet (or L2-broadcast domain), thereby allowing L2 peer-to-peer communication. Yet, the access unit forwards all the user traffic towards the edge router on account of security and accounting issues, which edge router acting as an Address Resolution Protocol (ARP) proxy. More specifically, the edge router emulates the target device, the network address of which needs to be resolved, by answering its own hardware address, thereby becoming the recipient of the traffic bound to that particular device, and by performing further L3-forwarding towards the appropriate destination.

This scheme is disadvantageous if more than one user device are connected via a single interface to the access unit. If so, a request to resolve a particular network address of a particular device connected via the same interface to the access unit is likely to be answered twice: once by the particular device that is assigned this network address, and once by the edge router acting as an ARP proxy for that particular device.

It is an object of the present invention to improve the resolution of network addresses in the event of two or more devices being connected via a single interface to an access unit, and further to an edge router acting as an ARP proxy.

According to the invention, this object is achieved due to the fact that said access unit further comprises a forwarding control unit coupled to said local repository and to said forwarding unit, and adapted to get from said local repository a particular port identifier associated with said particular network address, and to discard said request if said particular port identifier identifies said particular port.

The access unit maintains a user database wherein user network addresses and user ports are associated in a one-to-one relationship. User network addresses and user ports are learnt statically via configuration, or dynamically by snooping auto-configuration messages such as Dynamic Host Configuration Protocol (DHCP) messages, etc.

A new ARP forwarding paradigm is then defined that makes use of the so-learnt data. The access unit looks up in the user database with the target network address to find out the target user port. The access unit discards the ARP request if that port matches the port through which the ARP request has been received (that is to say, the port to which the sender device is coupled), else forwards the ARP request towards the edge router.

An access unit according to the invention is advantageous in that network addresses are correctly resolved in the event of two or more devices being connected via a single interface to the access unit. If so, the access unit discards the ARP request to prevent the edge router from resolving the network address, and lets the co-located target device answer the ARP request, thereby allowing direct peer-to-peer communication between the sender device and the target device without any traffic going through the edge router.

Further characterizing embodiments are mentioned in the appended claims.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The above and other objects and features of the invention will become more apparent and the invention itself will be best understood by referring to the following description of an embodiment taken in conjunction with the accompanying drawings wherein:
- fig. 1 represents a data communication system,
- fig. 2 represents an access unit according to the invention.

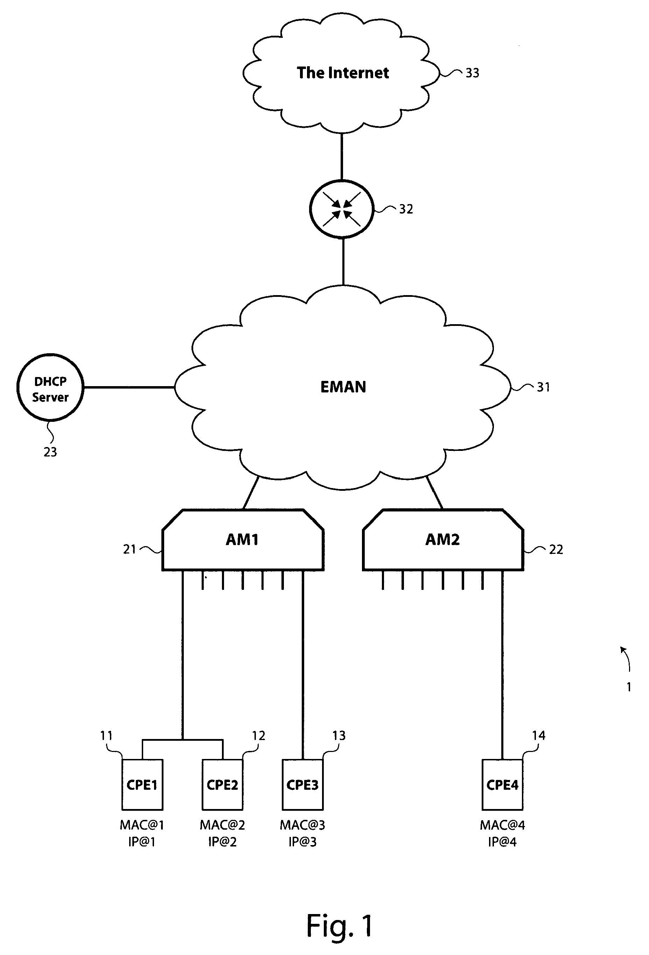

There is seen in fig. 1 an Internet Protocol (IP)-based data communication system 1 comprising:
- Customer Premises Equipment 11 (CPE1), 12 (CPE2), 13 (CPE3) and 14 (CPE4),
- Access Multiplexers 21 (AM1) and 22 (AM2),
- a DHCP server 23,
- an Ethernet-based MAN 31 (EMAN),
- an edge router 32,
- the Internet 33.

CPE 11, 12 and 13 are coupled to the access multiplexer 21 via twisted pairs, optical fibers or a wireless interface. CPE 14 is similarly coupled to the access multiplexer 22. CPE 11 and 12 are coupled to each other via e.g. a Local Area Network (LAN), and are further coupled to the access multiplexer 21 via a single interface. The access multiplexers 21 and 22 and the DHCP server 23 are coupled to each other via the EMAN 31. The EMAN 31 is further coupled to the Internet 33 via the edge router 32.

CPE 11, 12, 13 and 14 include any piece of equipment that is assigned a public IP address, being a router, a modem, a server, a set top box, a personal computer, etc. CPE 11, 12, 13 and 14 are assigned MAC addresses MAC@1, MAC@2, MAC@3 and MAC@4 respectively.

CPE 11, 12, 13 and 14 form part of the same IP subnet.

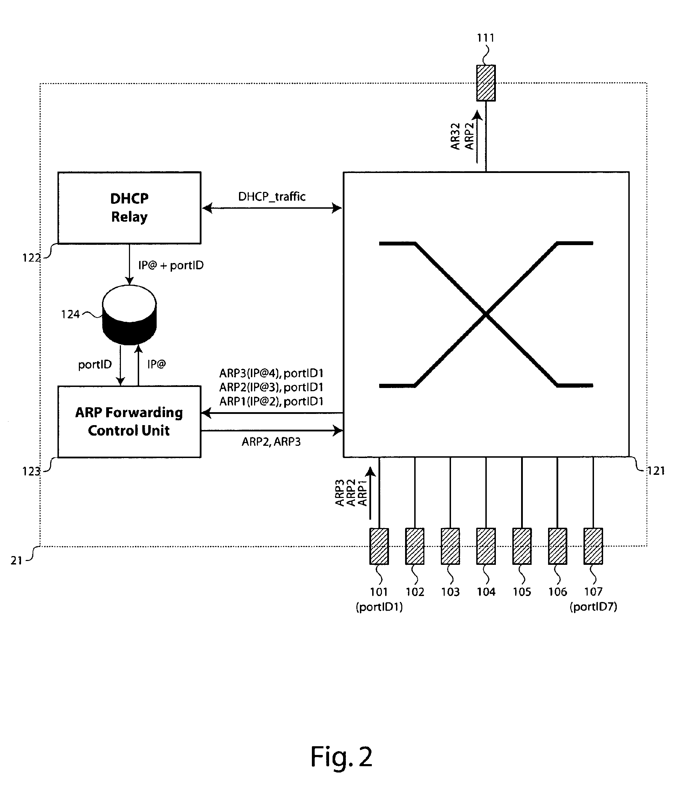

There is seen in fig. 2 a preferred embodiment of the access multiplexer 21 comprising the following functional blocks:
- user ports 101 to 107 for coupling to CPE,
- a network port 111 for coupling to a data communication network,
- an Ethernet switch 121,
- a DHCP relay 122,
- an ARP forwarding control unit 123,
- a local repository 124, wherein user IP addresses are held in one-to-one relationships with user port identifiers.

The Ethernet switch 121 is coupled to the user ports 101 to 107, to the network port 111, to the DHCP relay 122 and to the ARP forwarding control unit 123. The DHCP relay 122 and the ARP forwarding control unit 123 are further coupled to the local repository 124.

The user ports 101 to 107 are assigned the port identifiers portID1 to portID7 respectively.

The Ethernet switch 121 is adapted to switch any incoming Ethernet frame from any ingress port towards any egress port by means of a forwarding table. The Ethernet switch 121 learns which MAC address is associated to which port by decoding the source MAC address of the incoming frames, and populates on the fly the forwarding table with the so-learned associations.

The Ethernet switch 121 further accommodates internal port(s) (not shown) to which the DHCP relay 122 and the ARP forwarding control unit 123 are coupled for receiving and transmitting frames from and to the data communication system 1.

The Ethernet switch 121 is further adapted to forward DHCP traffic towards the DHCP relay 122 for further processing, and to forward upstream ARP traffic received through the user ports 101 to 107 towards the ARP forwarding control unit 123 for further processing.

The DHCP relay 122 is adapted to relay any DHCP message from a client device to the DHCP server 23, and vice-versa (see DHCP_traffic in fig. 2). The DHCP relay 122 implements a BOOTP relay agent (also referred to as a DHCP relay agent) as described in Request For Comments (RFC) 951, or any further release of this document if applicable.

The DHCP relay 122 is further adapted to populate in the local repository the association between user ports and publicly assigned IP addresses in DHCPACK messages (see IP@ + portID in fig. 2).

The ARP forwarding control unit 123 is adapted to forward or discard ARP frames based on whether the port through which an ARP request is received, further referred to as the receiving port, matches the port to which the target device is coupled, further referred to as the target port.

An operation of the preferred embodiment follows.

Initially, CPE 11 (more specifically, a DHCP client housed by CPE 11) initiates a DHCP session to obtain network configuration parameters from a DHCP server. The network configuration parameters includes a public IP address, primary and secondary Domain Name Server's (DNS) IP addresses, gateway's IP address, subnet mask, etc.

The DHCP session is initiated by broadcasting a DHCPDISCOVER message (not shown), which DHCP message being relayed by the DHCP relay 122 towards DHCP server 23. The DHCP session goes on by exchanging further DHCP messages (DHCPOFFER, DHCPREQUEST), and terminates with the DHCP server 23 returning a DHCPACK message to the DHCP client. The DHCPACK message contains a public IP address IP@1 assigned to CPE 11.

The DHCP relay writes into the local repository 124 this IP address IP@1 as being associated with the port identifier identifying the user port to which CPE 11 is coupled, presently portID1.

Similarly, CPE 12, 13 and 14 are assigned public IP addresses IP@2, IP@3 and IP@4 respectively. The IP addresses IP@2 and IP@3 are held in the local repository 124 as being associated with the port identifiers portlD1 and portlD7 respectively. The IP address IP@4 is similarly held in a local repository of the access multiplexer 22.

In a further step, CPE 11 issues an ARP request ARP1 to resolve the network address IP@2 of CPE 12. The ARP request ARP1 contains as destination address the Ethernet broadcast address FF:FF:FF:FF:FF:FF.

In prior art systems, the ARP request ARP1 is unconditionally forwarded to the edge router 32. As a consequence, both CPE 12 and the edge router 32 answer the ARP request ARP1. CPE 11 will then send traffic bound to CPE 12 to the device that sends the last reply. If CPE 12 answers last, then direct L2 communication between CPE 11 and 12 take place. Yet, the edge router 32 is likely to answer far after CPE 12 will do on account of the time necessary to forward the ARP request ARP1 through the EMAN network 31 up to the edge router 32, in which case L3 communication between CPE 11 and 12 take place through the edge router 32.

In the present invention, the Ethernet switch 121 forwards the ARP request ARP1 to the ARP forwarding control unit 123, together with the receiving port identifier, presently portID1.

The ARP forwarding control unit 123 looks up in the local repository 124 which user port is associated with the target IP address to be resolved, presently the IP address IP@2 is currently associated with the port identifier portlD1.

The ARP forwarding control unit 123 checks whether the target port identifier, presently portID1, matches the receiving port identifier supplied by the Ethernet switch 121, presently portID1, and if so, drops the ARP request ARP1.

By so doing, CPE 12 only sends an ARP reply back to CPE 11, wherein the network address IP@2 is resolved into the MAC address MAC@2. Direct L2 communication between CPE 11 and 12 will then take place without any traffic going through the edge router 32, thereby saving substantial network resources.

In a further step, CPE 11 issues an ARP request ARP2 to resolve the network address IP@3 of CPE 13.

The Ethernet switch 121 forwards the ARP request ARP2 to the ARP forwarding control unit 123, together with the receiving port identifier portID1.

The ARP forwarding control unit 123 looks up in the local repository 124 the port identifier associated with the target IP address IP@3, presently portID7.

The target port identifier, presently portID7, does not match the receiving port identifier, presently portID1. Consequently, the ARP request ARP2 is forwarded through the network port 111 towards the edge router 32 for further handling.

The edge router 32 sends an ARP reply back to CPE 11, wherein the network address IP@3 is resolved into a MAC address of the edge router 32. L3 communication between CPE 11 and 13 will then take place through the edge router 32.

In a last step, CPE 11 issues an ARP request ARP3 to resolve the network address IP@4 of CPE 14.

The Ethernet switch 121 forwards the ARP request ARP3 to the ARP forwarding control unit 123, together with the receiving port identifier portID1.

The ARP forwarding control unit 123 looks up in the local repository 124 the port identifier associated with the target IP address IP@4. There is no such IP address in the local repository 124. Consequently, the ARP request ARP3 is forwarded through the network port 111 towards the edge router 32 for further handling.

The edge router 32 sends an ARP reply back to CPE 11, wherein the network address IP@4 is resolved into a MAC address of the edge router 32. L3 communication between CPE 11 and 14 will then take place through the edge router 32.

In an alternative embodiment of the present invention, the Ethernet switch 121 does not pass the receiving port identifier to the ARP forwarding control unit 123, but let the latter determine by means of the local repository 124 which port identifier is associated with the sender IP address encoded in the ARP request.

In an alternative embodiment of the present invention, the DHCP relay 122 is adapted to snoop DHCP traffic (meaning without any interaction with DHCP client or server), and to populate on the fly the local repository 124. The Ethernet switch 121 is further adapted to provide the DHCP relay 122 with a copy of DHCP traffic (both upstream and downstream traffic), while forwarding DHCP traffic to the appropriate destination. In this embodiment, the access multiplexer 21 is located between a DHCP client and a DHCP relay agent or server (in which case the DHCP client and the DHCP relay agent or server are within the same subnet).

It is to be noticed that the present invention is not restricted to IP-based or Ethernet-based system, but is applicable to any data communication system wherein network address resolution is involved.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. An access unit (21) comprising:
- at least one user port (101 to 107) for coupling to a user device (11, 12),
- at least one network port (111) for coupling to an edge router (32),
- a local repository (124) wherein user network addresses (IP@) are held in one-to-one relationship with user port identifiers (portID),
- a forwarding unit (121) coupled to said at least one user port and said at least one network port, and adapted to receive through a particular user port (103) a request (ARP1) to resolve a particular network address (IP@2) into a hardware address, and to forward said request through a particular network port (111) towards said edge router,
***characterized in that*** said access unit further comprises a forwarding control unit (122) coupled to said local repository and to said forwarding unit, and adapted to get from said local repository a particular port identifier (portID1) associated with said particular network address, and to discard said request if said particular port identifier identifies said particular port.

2. An access unit according to claim 1, ***characterized in that*** said access unit is a digital subscriber line access unit.

3. An access unit according to claim 1, ***characterized in that*** said request is an ARP request.
